# EUROPEAN PATENT APPLICATION

(11) **EP 4 712 597 A1**
(43) Date of publication of application: **18.03.2026**
(21) Application number: 24806395.0
(22) Date of filing: 07.05.2024
(51) Int. Cl.: H04W 56/00

(54) **TIME SYNCHRONIZATION STATE PROCESSING METHOD AND APPARATUS, TERMINAL, AND NETWORK-SIDE DEVICE**

(30) Priority: 12.05.2023 CN 202310536746
(71) Applicant: Vivo Mobile Communication Co., Ltd., Dongguan, Guangdong 523863 (CN)
(72) Inventor: ZHANG, Yanxia, Dongguan, Guangdong 523863 (CN); YANG, Xiaodong, Dongguan, Guangdong 523863 (CN)
(74) Representative: Cabinet Beaumont
(86) International application number: PCT/CN2024/091303
(87) International publication number: WO 2024/235039

(57) **Abstract**

This application discloses a time synchronization state processing method and apparatus, a terminal, and a network-side device, and pertains to the field of communication technologies. The time synchronization state processing method in embodiments of this application includes: performing, by a terminal, a first operation in a case that a function of accessing a network based on a change in a time synchronization state is enabled, where the first operation includes at least one of the following: an operation of determining whether a time synchronization state has changed; a local storage operation for time synchronization state indication information; or a cell reselection operation, where the cell reselection operation is used by the terminal to select a cell that supports providing time synchronization state information.

## Description

### CROSS-REFERENCE TO RELATED APPLICATIONS

This application claims priority to Chinese Patent Application No. 202310536746.3, filed in China on May 12, 2023, which is incorporated herein by reference in its entirety.

### TECHNICAL FIELD

This application pertains to the field of communication technologies, and specifically, relates to a time synchronization state processing method and apparatus, a terminal, and a network-side device.

### BACKGROUND

A 5th-generation mobile communication technology (5th-Generation Mobile Networks, 5G) and a beyond (beyond) 5G system support an access network (Radio Access Network, RAN) in providing reference time information for a terminal, and a time synchronization state of a network node may change, for example, a clock state becomes better or worse. When a time synchronization state of the RAN changes, a terminal in a non-connected state needs to re-access the network to obtain changed time synchronization state information. Currently, a related mechanism of how the terminal processes the change in the time synchronization state of the RAN is unknown. This affects communication performance of the terminal.

### SUMMARY

Embodiments of this application provide a time synchronization state processing method and apparatus, a terminal, and a network-side device, to provide a specific processing mechanism for a terminal to process a change in a time synchronization state of a RAN, and ensure communication performance of the terminal.

According to a first aspect, a time synchronization state processing method is provided. The method is performed by a terminal, and the method includes:
performing, by the terminal, a first operation in a case that a function of accessing a network based on a change in a time synchronization state is enabled, where the first operation includes at least one of the following:
an operation of determining whether a time synchronization state has changed;
a local storage operation for time synchronization state indication information; or
a cell reselection operation, where the cell reselection operation is used by the terminal to select a cell that supports providing time synchronization state information.

According to a second aspect, a time synchronization state processing method is provided. The method is performed by a network-side device, and the method includes:
sending, by the network-side device, time synchronization assistance information to a terminal, where the time synchronization assistance information is used for assisting the terminal in performing a first operation, and the first operation includes at least one of the following:
an operation of determining whether a time synchronization state has changed;
a local storage operation for time synchronization state indication information; or
a cell reselection operation, where the cell reselection operation is used by the terminal to select a cell that supports providing time synchronization state information.

According to a third aspect, a time synchronization state processing apparatus is provided. The apparatus is applied to a terminal, and the apparatus includes:
an execution module, configured to perform a first operation in a case that the terminal enables a function of accessing a network based on a change in a time synchronization state, where the first operation includes at least one of the following:
an operation of determining whether a time synchronization state has changed;
a local storage operation for time synchronization state indication information; or
a cell reselection operation, where the cell reselection operation is used by the terminal to select a cell that supports providing time synchronization state information.

According to a fourth aspect, a time synchronization state processing apparatus is provided. The apparatus is applied to a network-side device, and the apparatus includes:
a sending module, configured to send time synchronization assistance information to a terminal, where the time synchronization assistance information is used for assisting the terminal in performing a first operation, and the first operation includes at least one of the following:
an operation of determining whether a time synchronization state has changed;
a local storage operation for time synchronization state indication information; or
a cell reselection operation, where the cell reselection operation is used by the terminal to select a cell that supports providing time synchronization state information.

According to a fifth aspect, a terminal is provided, where the terminal includes a processor and a memory, the memory stores a program or instructions capable of running on the processor, and when the program or the instructions are executed by the processor, the steps of the method according to the first aspect are implemented.

According to a sixth aspect, a terminal is provided, including a processor and a communication interface. The processor is configured to perform a first operation in a case that the terminal enables a function of accessing a network based on a change in a time synchronization state, where the first operation includes at least one of the following:
an operation of determining whether a time synchronization state has changed;
a local storage operation for time synchronization state indication information; or
a cell reselection operation, where the cell reselection operation is used by the terminal to select a cell that supports providing time synchronization state information.

According to a seventh aspect, a network-side device is provided, where the network-side device includes a processor and a memory, the memory stores a program or instructions capable of running on the processor, and when the program or the instructions are executed by the processor, the steps of the method according to the second aspect are implemented.

According to an eighth aspect, a network-side device is provided, including a processor and a communication interface. The communication interface is configured to send time synchronization assistance information to a terminal, where the time synchronization assistance information is used for assisting the terminal in performing a first operation, and the first operation includes at least one of the following:
an operation of determining whether a time synchronization state has changed;
a local storage operation for time synchronization state indication information; or
a cell reselection operation, where the cell reselection operation is used by the terminal to select a cell that supports providing time synchronization state information.

According to a ninth aspect, a readable storage medium is provided, where the readable storage medium stores a program or instructions, and when the program or the instructions are executed by a processor, the steps of the method according to the first aspect are implemented, or the steps of the method according to the second aspect are implemented.

According to a tenth aspect, a wireless communication system is provided, including a terminal and a network-side device, where the terminal may be configured to perform the steps of the method according to the first aspect, and the network-side device may be configured to perform the steps of the method according to the second aspect.

According to an eleventh aspect, a chip is provided, where the chip includes a processor and a communication interface, the communication interface is coupled to the processor, and the processor is configured to run a program or instructions, to implement the method according to the first aspect, or implement the method according to the second aspect.

According to a twelfth aspect, a computer program/program product is provided, where the computer program/program product is stored in a storage medium, and the program/program product is executed by at least one processor to implement the steps of the method according to the first aspect, or implement the steps of the method according to the second aspect.

In the embodiments of this application, when a terminal determines that a function of accessing a network based on a time synchronization state is enabled, the terminal performs an operation of determining whether a time synchronization state has changed, or performs a local storage operation for time synchronization state indication information, or performs a cell reselection operation, so that the terminal can determine whether a time synchronization state of a cell has changed. This enables the terminal to access a network-side device in a timely manner to obtain changed time synchronization state information, to effectively ensure performance of communication between the terminal and the network-side device.

### BRIEF DESCRIPTION OF THE DRAWINGS

FIG. 1 is a block diagram of a wireless communication system to which embodiments of this application are applicable;
FIG. 2 is a flowchart of a time synchronization state processing method according to an embodiment of this application;
FIG. 3 is a flowchart of another time synchronization state processing method according to an embodiment of this application;
FIG. 4 is a structural diagram of a time synchronization state processing apparatus according to an embodiment of this application;
FIG. 5 is a structural diagram of another time synchronization state processing apparatus according to an embodiment of this application;
FIG. 6 is a structural diagram of a communication device according to an embodiment of this application;
FIG. 7 is a structural diagram of a terminal according to an embodiment of this application; and
FIG. 8 is a structural diagram of a network-side device according to an embodiment of this application.

### DETAILED DESCRIPTION

The following clearly describes the technical solutions in the embodiments of this application with reference to the accompanying drawings in the embodiments of this application. Clearly, the described embodiments are some but not all of the embodiments of this application. All other embodiments obtained by a person of ordinary skill in the art based on the embodiments of this application fall within the protection scope of this application.

The terms "first", "second", and the like in this application are intended to distinguish between similar objects, but not to describe a specific order or sequence. It should be understood that terms used in this way are interchangeable in appropriate circumstances so that the embodiments of this application can be implemented in other orders than the order illustrated or described herein. In addition, "first" and "second" are usually used to distinguish between objects of a same type, and do not limit a quantity of objects. For example, there may be one or more first objects. In addition, "or" in this application indicates at least one of connected objects. For example, "A or B" covers three solutions: Solution 1: A is included, and B is not included. Solution 2: B is included, and A is not included. Solution 3: Both A and B are included. The character "/" usually indicates an "or" relationship between associated objects.

The term "indication" in this application may be a direct indication (namely, an explicit indication), or may be an indirect indication (namely, an implicit indication). The direct indication may be understood as that a sender explicitly notifies, in a sent indication, a receiver of specific information, an operation that needs to be performed, a request result, or other content. The indirect indication may be understood as that a receiver determines corresponding information based on an indication sent by a sender; or performs determining, and determines, based on a determining result, an operation that needs to be performed, a request result, or the like.

It should be noted that technologies described in the embodiments of this application are not limited to a long term evolution (Long Term Evolution, LTE)/LTE-advanced (LTE-Advanced, LTE-A) system, and may also be applied to other wireless communication systems, such as code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), or other systems. The terms "system" and "network" in the embodiments of this application are usually used interchangeably, and the described technology may be applied to the systems and the radio technologies mentioned above, or may be applied to other systems and radio technologies. In the following descriptions, a new radio (New Radio, NR) system is described for an illustration purpose, and NR terms are used in most of the following descriptions, but these technologies may also be applied to systems other than the NR system, for example, a 6th-generation (6th Generation, 6G) communication system.

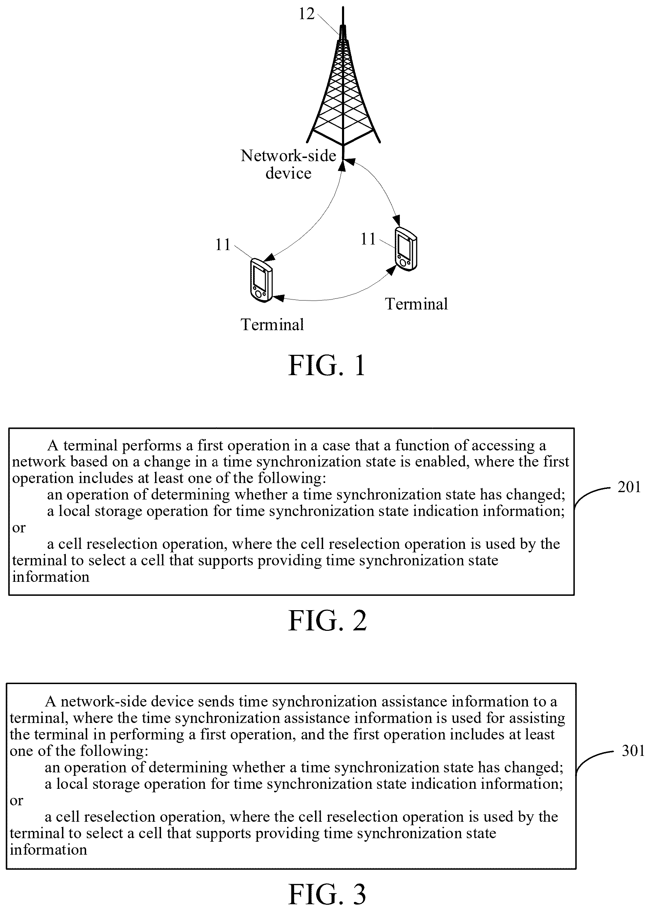

FIG. 1 is a block diagram of a wireless communication system to which embodiments of this application are applicable. The wireless communication system includes a terminal 11 and a network-side device 12. The terminal 11 may be a terminal-side device such as a mobile phone, a tablet computer (Tablet Personal Computer), a laptop computer (Laptop Computer), a notebook computer, a personal digital assistant (Personal Digital Assistant, PDA), a palmtop computer, a netbook, an ultra-mobile personal computer (Ultra-mobile Personal Computer, UMPC), a mobile Internet device (Mobile Internet Device, MID), an augmented reality (Augmented Reality, AR)/virtual reality (Virtual Reality, VR) device, a robot, a wearable device (Wearable Device), a flight vehicle (flight vehicle), an in-vehicle device (Vehicle User Equipment, VUE), a shipborne device, a pedestrian terminal (Pedestrian User Equipment, PUE), a smart home appliance (a home appliance with a wireless communication function, for example, a refrigerator, a television, a washing machine, or furniture), a game console, a personal computer (Personal Computer, PC), a teller machine, or a self-service machine. The wearable device includes a smart watch, a smart band, a smart headset, smart glasses, smart jewelry (a smart bangle, a smart bracelet, a smart ring, a smart necklace, a smart anklet, a smart ankle chain, or the like), a smart wristband, smart clothing, or the like. The in-vehicle device may also be referred to as an in-vehicle terminal, an in-vehicle controller, an in-vehicle module, an in-vehicle component, an in-vehicle chip, an in-vehicle unit, or the like. It should be noted that a specific type of the terminal 11 is not limited in the embodiments of this application.

The network-side device 12 may include an access network device or a core network device. The access network device may also be referred to as a radio access network (Radio Access Network, RAN) device, a radio access network function, or a radio access network unit. The access network device may include a base station, a wireless local area network (Wireless Local Area Network, WLAN) access point (Access Point, AP), a wireless fidelity (Wireless Fidelity, Wi-Fi) node, or the like. The base station may be referred to as a NodeB (NodeB, NB), an evolved NodeB (Evolved NodeB, eNB), a next-generation NodeB (the next generation NodeB, gNB), a new radio NodeB (New Radio NodeB, NR NodeB), an access point, a relay station (Relay Base Station, RBS), a serving base station (Serving Base Station, SBS), a base transceiver station (Base Transceiver Station, BTS), a radio base station, a radio transceiver, a basic service set (Basic Service Set, BSS), an extended service set (Extended Service Set, ESS), a home NodeB (home NodeB, HNB), a home evolved NodeB (home evolved NodeB), a transmission reception point (Transmission Reception Point, TRP), or another appropriate term in the art. Provided that the same technical effects are achieved, the base station is not limited to a specific technical term. It should be noted that a base station in an NR system is used only as an example for description in the embodiments of this application, but a specific type of the base station is not limited.

The core network device may include but is not limited to at least one of the following: a core network node, a core network function, a mobility management entity (Mobility Management Entity, MME), an access and mobility management function (Access and Mobility Management Function, AMF), a session management function (Session Management Function, SMF), a user plane function (User Plane Function, UPF), a policy control function (Policy Control Function, PCF), a policy and charging rules function (Policy and Charging Rules Function, PCRF), an edge application server discovery function (Edge Application Server Discovery Function, EASDF), unified data management (Unified Data Management, UDM), a unified data repository (Unified Data Repository, UDR), a home subscriber server (Home Subscriber Server, HSS), centralized network configuration (Centralized network configuration, CNC), a network repository function (Network Repository Function, NRF), a network exposure function (Network Exposure Function, NEF), a local NEF (Local NEF, or L-NEF), a binding support function (Binding Support Function, BSF), an application function (Application Function, AF), and the like. It should be noted that the core network device in the NR system is used only as an example for description in the embodiments of this application, but a specific type of the core network device is not limited.

A time synchronization state processing method and apparatus, a terminal, and the like provided in the embodiments of this application are described below in detail with reference to the accompanying drawings and by using some embodiments and application scenarios thereof.

FIG. 2 is a flowchart of a time synchronization state processing method according to an embodiment of this application. As shown in FIG. 2, the method includes the following steps:

Step 201: A terminal performs a first operation in a case that a function of accessing a network based on a change in a time synchronization state is enabled, where the first operation includes at least one of the following:
an operation of determining whether a time synchronization state has changed;
a local storage operation for time synchronization state indication information; or
a cell reselection operation, where the cell reselection operation is used by the terminal to select a cell that supports providing time synchronization state information.

It should be noted that enabling the function of accessing a network based on a change in a time synchronization state may be understood as starting, activating, or configuring a function of the terminal to access a network based on a change in a time synchronization state. Correspondingly, disabling the function of accessing a network based on a change in a time synchronization state may be understood as closing, deactivating, or releasing the function of the terminal to access a network based on a change in a time synchronization state.

It should be noted that the terminal in this embodiment of this application has a function or capability of accessing a network based on a change in a time synchronization state. For example, related program code may be written to enable the terminal to have the function or capability. Specifically, in a case that the terminal receives a specific operation, a specific instruction, or a specific indication, for example, in a case that the terminal receives configuration information sent by a core network, the configuration information carries a request indication, and the request indication is used for requesting the terminal to access a network when a time synchronization state has changed, or for example, in a case that the terminal receives time synchronization assistance information sent by a base station, the terminal may enable the function of accessing a network based on a change in a time synchronization state, in other words, start or perform the function of accessing a network based on a change in a time synchronization state. It can be understood that the function of accessing a network based on a change in a time synchronization state may be used for the terminal to access a network based on a change in a time synchronization state.

Optionally, in an implementation, in a case that the function of accessing a network based on a change in a time synchronization state is enabled, the terminal performs the operation of determining whether a time synchronization state has changed. For example, an access stratum (Access Stratum, AS) of the terminal determines whether time synchronization state information of a cell has changed, and a determining result includes that a change occurs or that no change occurs. Further, by enabling the function of accessing a network based on a change in a time synchronization state and performing the operation of determining whether a time synchronization state has changed, the terminal can determine, based on the determining result, whether the time synchronization state has changed. Based on the determining result, the terminal (for example, a non-access stratum (Non Access Stratum, NAS) of the terminal) determines whether a radio resource control (Radio Resource Control, RC) connection setup or connection resumption procedure needs to be initiated to obtain time synchronization state information.

Optionally, in another implementation, in a case that the function of accessing a network based on a change in a time synchronization state is enabled, the terminal performs the local storage operation for time synchronization state indication information. The time synchronization state indication information may be used for indicating a time synchronization state of a cell accessed by the terminal. For example, the terminal moves from a first cell to a second cell, the terminal has no locally stored time synchronization state indication information when the terminal is in the first cell, and the second cell provides time synchronization state indication information when the terminal moves to the second cell. In this case, the terminal may perform the local storage operation for time synchronization state indication information. In this case, the terminal may consider that the time synchronization state has changed. Alternatively, during a period in which the terminal camps on a first cell, the first cell initially provides no time synchronization state indication information, and then the first cell provides time synchronization state indication information. In this case, the terminal performs the local storage operation for time synchronization state indication information. In this case, the terminal may also consider that the time synchronization state has changed. Certainly, there may alternatively be other possible cases in which the terminal performs the local storage operation for time synchronization state indication information to determine whether the time synchronization state has changed. Details are not described herein.

It should be noted that, if the terminal does not perform the local storage operation for time synchronization state indication information in a case that the terminal enables the function of accessing a network based on a change in a time synchronization state, the terminal may consider that the time synchronization state does not change.

In some embodiments, the time synchronization state indication information may be represented by using a reference report identity (reference report Identity, reference report ID) or an event ID (event ID). For example, the time synchronization state indication information may correspond to time synchronization state information.

Optionally, in another implementation, in a case that the function of accessing a network based on a change in a time synchronization state is enabled, the terminal performs the cell reselection operation, to select a cell that supports providing time synchronization state information. In this case, the terminal also considers that the time synchronization state has changed.

In this embodiment of this application, in a case that the function of accessing a network based on a change in a time synchronization state is enabled, the terminal performs the operation of determining whether a time synchronization state has changed, or performs the local storage operation for time synchronization state indication information, or performs the cell reselection operation, so that the terminal can determine whether a time synchronization state of a cell has changed. This enables the terminal to access a network-side device (for example, a base station) in a timely manner to obtain changed time synchronization state information, to effectively ensure performance of communication between the terminal and the network-side device.

It should be noted that the terminal in this embodiment of this application may be a terminal in a non-connected state (for example, a terminal in an idle (idle) state, or a terminal in an inactive (inactive) state). Therefore, the terminal in the non-connected state can determine, in a timely manner according to the foregoing method, whether a time synchronization state of a RAN has changed, to ensure that the terminal in the non-connected state can access the network-side device in a timely manner to obtain time synchronization state information when the time synchronization state has changed, to ensure performance of communication between the terminal and the network-side device.

Optionally, before the terminal performs the first operation, the method further includes the following step:

The terminal receives time synchronization assistance information sent by a base station, where the time synchronization assistance information is used for assisting the terminal in performing the first operation, where
the time synchronization assistance information includes one or more of the following:
first-type indication information, where the first-type indication information is used for indicating that the base station is a base station that supports providing time synchronization state information;
second-type indication information, where the second-type indication information is used for indicating that a cell accessed by the terminal is a cell that supports providing time synchronization state information; or
a time synchronization state information field.

For example, the time synchronization assistance information includes the first-type indication information. Therefore, when receiving the time synchronization assistance information, the terminal can determine, based on the first-type indication information, that a currently accessed base station is a base station that supports providing time synchronization state information (for example, a subsequent second base station), so that the terminal can perform the operation of determining whether a time synchronization state has changed. In this way, the terminal can determine, in a timely manner, whether the time synchronization state has changed, so that the terminal can obtain changed time synchronization state information in a timely manner, to ensure performance of communication between the terminal and the network-side device.

Alternatively, the time synchronization assistance information includes the time synchronization state information field, and the time synchronization state information field carries time synchronization state indication information. Therefore, the terminal can obtain the time synchronization state indication information based on the received time synchronization assistance information, and perform the local storage operation for time synchronization state indication information.

Alternatively, the time synchronization assistance information includes the time synchronization state information field, and the time synchronization state information field is set to null. In this case, the terminal may perform the cell reselection operation based on the time synchronization assistance information, to select a cell that supports providing time synchronization state information, to ensure that the terminal accesses, in a timely manner, a network-side device that provides time synchronization state information, and ensure communication performance of the terminal.

In this embodiment of this application, when receiving the time synchronization assistance information, the terminal may enable the function of accessing a network based on a change in a time synchronization state, and then perform the operation of determining whether a time synchronization state has changed, the local storage operation for time synchronization state indication information, or the cell reselection operation, to ensure that the terminal accesses a network (for example, a base station) in a timely manner to obtain changed time synchronization state information.

Optionally, when the terminal performs the operation of determining whether a time synchronization state has changed, in a case that a first condition is met, the terminal determines that time synchronization state information of a cell has changed, where
the first condition includes at least one of the following:
the terminal moves from a first base station to a second base station;
the terminal moves from a second base station to a first base station;
the terminal moves from a second base station to another second base station;
the terminal moves from a first cell to a second cell, where the first cell and the second cell are cells managed by a same second base station, the second cell provides time synchronization state indication information, and the terminal currently has no locally stored time synchronization state indication information;
during a period in which the terminal camps on a third cell of a second base station, the third cell changes from providing no time synchronization state indication information to providing time synchronization state indication information;
during a period in which the terminal camps on a fourth cell of a second base station, the fourth cell changes from providing first time synchronization state indication information to providing second time synchronization state indication information, where the first time synchronization state indication information is different from the second time synchronization state indication information;
during a period in which the terminal camps on a fifth cell of a second base station, time synchronization state indication information provided by the fifth cell changes from an active state to an inactive state;
during a period in which the terminal camps on a sixth cell of a second base station, time synchronization state indication information provided by the sixth cell changes from an inactive state to an active state;
the terminal moves from a seventh cell to an eighth cell, where both a state corresponding to third time synchronization state indication information provided by the seventh cell and a state corresponding to fourth time synchronization state indication information provided by the eighth cell are inactive states, and the third time synchronization state indication information is different from the fourth time synchronization state indication information;
the terminal moves from a ninth cell to a tenth cell, where a state corresponding to fifth time synchronization state indication information provided by the ninth cell is an inactive state, a state corresponding to sixth time synchronization state indication information provided by the tenth cell is an active state, and the fifth time synchronization state indication information is the same as the sixth time synchronization state indication information; or
the terminal moves from an eleventh cell to a twelfth cell, where a state corresponding to seventh time synchronization state indication information provided by the eleventh cell is an active state, a state corresponding to eighth time synchronization state indication information provided by the twelfth cell is an inactive state, and the seventh time synchronization state indication information is the same as the eighth time synchronization state indication information, where
the first base station is a base station that does not support providing time synchronization state information (which may be understood as a conventional base station or a non-enhanced base station), and the second base station is a base station that supports providing time synchronization state information (which may be understood as an enhanced base station).

It should be noted that the time synchronization state information is provided by the network-side device for the terminal after the terminal accesses the network-side device when the terminal determines that the time synchronization state has changed.

For ease of understanding, several cases included in the first condition are described below by using examples in specific implementation scenarios.

For example, scenario 1: When the terminal performs the operation of determining whether a time synchronization state has changed, if the terminal moves from a base station that does not support providing time synchronization state information (that is, a first base station) to a base station that supports providing time synchronization state information (that is, a second base station), the terminal determines that time synchronization state information of a cell has changed.

Scenario 2: When the terminal performs the operation of determining whether a time synchronization state has changed, if the terminal moves from a base station that supports providing time synchronization state information (that is, a second base station) to a base station that does not support providing time synchronization state information (that is, a first base station), the terminal determines that time synchronization state information of a cell has changed. It should be noted that, in this case, the terminal (for example, the access stratum) still determines that the time synchronization state has changed, and therefore, the AS of the terminal provides a time synchronization state change indication to the NAS of the terminal. However, because the base station that does not support providing time synchronization state information cannot provide time synchronization state information for the terminal, the terminal cannot obtain time synchronization state information even if the terminal accesses a network. In this case, the AS of the terminal further provides first indication information to the NAS of the terminal. Based on the first indication information, the NAS of the terminal determines that the terminal does not need to access a network, for example, does not initiate an RRC connection setup or connection resumption procedure. The first indication information includes one or more of the following:
the terminal moves to a cell that does not support providing time synchronization state information;
a current serving base station of the terminal does not support providing time synchronization state information; or
a current serving cell of the terminal does not support providing time synchronization state information.

It should be noted that, based on the first indication information, the terminal (for example, the NAS) may disable (or deactivate or close) the function of accessing a network based on a change in a time synchronization state. In a case that the terminal moves from the first base station to the second base station, the terminal (for example, the NAS) may enable (or activate, start, or configure) the function of accessing a network based on a change in a time synchronization state. The descriptions are also applicable to other subsequent scenarios or embodiments of this application. For example, when the terminal moves from the second base station to the first base station, the terminal disables, based on the first indication information, the function of accessing a network based on a change in a time synchronization state. Subsequently, in a case that the terminal moves from the first base station to the second base station, the AS of the terminal provides second indication information to the NAS of the terminal. Based on the second indication information, the terminal (for example, the NAS) may enable (or activate, start, or configure) the function of accessing a network based on a change in a time synchronization state. The second indication information includes one or more of the following:
the terminal moves to a cell that supports providing time synchronization state information;
a current serving base station of the terminal supports providing time synchronization state information; or
a current serving cell of the terminal supports providing time synchronization state information.

Scenario 3: When the terminal performs the operation of determining whether a time synchronization state has changed, if the terminal moves from a base station that supports providing time synchronization state information to another base station that supports providing time synchronization state information, the terminal determines that time synchronization state information of a cell has changed.

Scenario 4: In a case that the terminal accesses a base station that supports providing time synchronization state information, if the terminal moves from a first cell under the base station to a second cell, where the second cell provides time synchronization state indication information, and the terminal currently does not include locally stored time synchronization state indication information (this may be considered as that the first cell provides no time synchronization state indication information), the terminal considers that time synchronization state information has changed. It should be noted that, in this case, when moving to the second cell, the terminal may perform a local storage operation on the time synchronization state indication information provided by the second cell, and further, the terminal may determine, based on the local storage operation, that time synchronization state information of the cell has changed. Another example is as follows:

Scenario 5: During a period in which the terminal camps on a third cell managed by a base station that supports providing time synchronization state information (which may be any cell managed by the base station), if the third cell changes from providing no time synchronization state indication information to providing time synchronization state indication information, for example, the third cell provides no time synchronization state indication information in an initial phase in which the terminal moves to the third cell, and the third cell changes to providing time synchronization state indication information during the period in which the terminal camps on the third cell, the terminal considers that time synchronization state information of the cell has changed. It should be noted that, in this case, in a case that the third cell changes to providing time synchronization state indication information, the terminal may perform a local storage operation on the time synchronization state indication information provided by the third cell, and further, the terminal may determine, based on the local storage operation, that the time synchronization state information of the cell has changed.

Scenario 6: During a period in which the terminal camps on a fourth cell managed by a base station that supports providing time synchronization state information (which may be any cell managed by the base station), if the fourth cell changes from providing first time synchronization state indication information to providing second time synchronization state indication information, and the two pieces of time synchronization state indication information are different, the terminal considers that time synchronization state information of the cell has changed. It should be noted that, in this case, the terminal may first release, delete, or clear the stored first time synchronization state indication information, and then perform a local storage operation on the second time synchronization state indication information.

Scenario 7: During a period in which the terminal camps on a fifth cell managed by a base station that supports providing time synchronization state information (which may be any cell managed by the base station), if time synchronization state indication information provided by the fifth cell changes from an active state to an inactive state, the terminal considers that time synchronization state information of the cell has changed.

Scenario 8: During a period in which the terminal camps on a sixth cell managed by a base station that supports providing time synchronization state information (which may be any cell managed by the base station), if time synchronization state indication information provided by the sixth cell changes from an inactive state to an active state, the terminal considers that time synchronization state information of the cell has changed.

Scenario 9: The terminal moves from a seventh cell to an eighth cell, where both of the two cells provide time synchronization state indication information, both a state corresponding to third time synchronization state indication information provided by the seventh cell and a state corresponding to fourth time synchronization state indication information provided by the eighth cell are inactive states, and the third time synchronization state indication information is different from the fourth time synchronization state indication information. In this case, the terminal considers that time synchronization state information of the cell has changed. For example, the time synchronization state indication information (for example, a reference report ID) may be carried in a system message. If reference report ID_1=deactivated is set in a system message of the seventh cell and reference report ID_2=deactivated is set in a system message of the eighth cell, when the terminal moves from the seventh cell to the eighth cell, the terminal considers that the time synchronization state indication information has changed. It should be noted that, in this case, when the terminal is in the seventh cell, the terminal may locally store the third time synchronization state indication information provided by the seventh cell, and when the terminal moves to the eighth cell, the terminal may replace the stored third time synchronization state indication information with the fourth time synchronization state indication information provided by the eighth cell. Further, the terminal may determine, based on the local storage operation, that the time synchronization state information of the cell has changed.

Scenario 10: The terminal moves from a cell to another cell, where both of the two cells provide time synchronization state indication information, and the time synchronization state indication information provided by the two cells is the same, but the time synchronization state indication information provided by the two cells is in different states, for example, time synchronization state indication information provided by a cell is in an active state, and time synchronization state indication information provided by the other cell is in an inactive state. In this case, the terminal considers that the time synchronization state indication information has changed.

It should be noted that, in this embodiment of this application, the first cell, the second cell, the third cell, the fourth cell, ..., and the twelfth cell are merely different expressions, and do not particularly indicate a specific cell. For example, a third cell in some scenarios may alternatively be a first cell or a second cell in another scenario, and a first cell in some scenarios may be a fourth cell or a fifth cell in another scenario. Similarly, the first time synchronization state indication information, the second time synchronization state indication information, and the like are merely different expressions, and do not particularly indicate specific time synchronization state indication information.

In this embodiment of this application, when the first condition is met, the terminal can determine that time synchronization state information of a cell has changed. This ensures that the terminal can obtain changed time synchronization state information in a timely manner, to ensure performance of communication between the terminal and the network-side device.

Optionally, in this embodiment of this application, a type of the base station includes the second base station and the first base station, and the terminal determines the type of the base station based on first information, where the first information includes at least one of the following:
third-type indication information, where the third-type indication information is used for indicating that the base station is the second base station; or
a time synchronization state information field.

Optionally, the third-type indication information may be provided by a system message (System Information Block, SIB), for example, provided by a SIB 1. For example, if the terminal receives the third-type indication information sent by the base station, the terminal may determine that a currently accessed base station is the second base station, that is, a base station that supports providing time synchronization state information; or if the terminal receives no first-type indication information sent by the base station, the terminal may consider that a currently accessed base station is the first base station, that is, a base station that does not support providing time synchronization state information.

In some embodiments, the first-type indication information and the third-type indication information may be the same indication information. To be specific, the first-type indication information is used for indicating that the base station is a base station that supports providing time synchronization state information, that is, the base station is the second base station.

In addition, if the first information is the time synchronization state information field, for example, if the terminal receives a system message sent by the base station and the system message provides the time synchronization state information field, the terminal determines that the corresponding base station is the second base station, that is, a base station that supports providing time synchronization state information. It should be noted that the time synchronization state information field herein and the time synchronization state information field included in the time synchronization assistance information may have one meaning, for example, both are time synchronization state information fields in system messages.

Optionally, the time synchronization state information field is used for carrying time synchronization state indication information or is set to null; or
the time synchronization state information field is used for carrying time synchronization state indication information and an active state or an inactive state corresponding to the time synchronization state indication information.

For example, a system message sent by a second base station may always provide a time synchronization state information field, and the time synchronization state information field may carry time synchronization state indication information (for example, a reference reported ID or an event ID), or the time synchronization state information field may be set to null, where the case in which the time synchronization state information field is null indicates that the second base station provides no time synchronization state indication information.

Alternatively, in another signaling format, the time synchronization state information field in the system message may carry time synchronization state indication information and a corresponding active state or inactive state, for example, reference reported ID=deactivated, or reference reported ID=activated. For example, the base station may set the time synchronization state information field in the system message to reference reported ID=activated when a time synchronization state of an access network changes (for example, becomes worse), or set the time synchronization state information field in the system message to reference reported ID=deactivated when a time synchronization state of an access network changes (for example, becomes better). It should be noted that the time synchronization state indication information corresponding to the inactive state may be understood that a network side stops providing (or broadcasting) time synchronization state indication information.

In this embodiment of this application, the terminal can determine the type of the base station based on the first-type indication information or the time synchronization state information field, to be specific, determine whether the base station supports providing time synchronization state information.

Optionally, in this embodiment of this application, in a case that the terminal performs the operation of determining whether a time synchronization state has changed, if a second condition is met, the terminal determines that time synchronization state information of a cell does not change, where the second condition includes at least one of the following:
the terminal moves from a second base station to a first base station;
the terminal moves from a first base station to another first station; or
the terminal moves from a thirteenth cell to a fourteenth cell, where the thirteenth cell and the fourteenth cell are cells managed by a same second base station, a state corresponding to ninth time synchronization state indication information provided by the thirteenth cell is the same as a state corresponding to tenth time synchronization state indication information provided by the fourteenth cell, and the ninth time synchronization state indication information is the same as the tenth time synchronization state indication information.

The first base station is a base station that does not support providing time synchronization state information, and the second base station is a base station that supports providing time synchronization state information. For example, if the terminal moves from the second base station to the first base station, the terminal considers that the time synchronization state information of the cell does not change. This can prevent the terminal from accessing a base station that does not support providing time synchronization state information to expect to obtain time synchronization state information, and therefore avoid an unnecessary connection setup or resumption procedure. Alternatively, if the terminal moves from a first base station to another first base station, the terminal also considers that the time synchronization state information of the cell does not change.

Alternatively, if the terminal moves from a cell under a base station that supports providing time synchronization state information to another cell, where time synchronization state indication information provided by the two cells is the same, and states corresponding to time synchronization state indication information provided by the two cells are also the same, for example, both are active states or inactive states, the terminal may consider that the time synchronization state information of the cell does not change.

Optionally, when the terminal determines that the time synchronization state information of the cell does not change, the access stratum (Access Stratum, AS) of the terminal provides first indication information to the non-access stratum (Non Access Stratum, NAS) of the terminal, where the first indication information is used for indicating at least one of the following:
the terminal moves to a cell that does not support providing time synchronization state information;
a current serving base station of the terminal does not support providing time synchronization state information; or
a current serving cell of the terminal does not support providing time synchronization state information.

In this embodiment of this application, in a case that the terminal enables a function of determining a change in a time synchronization state, the terminal may further perform a local storage operation for time synchronization state indication information, to determine that the time synchronization state has changed. Optionally, that the terminal performs the local storage operation for time synchronization state indication information includes at least one of the following:
the terminal updates locally stored time synchronization state indication information when determining that time synchronization state information has changed, in other words, the terminal updates the locally stored time synchronization state indication information once the terminal determines that the time synchronization state information has changed; or
the terminal updates locally stored time synchronization state indication information when obtaining updated time synchronization state information, in other words, the terminal may update the locally stored time synchronization state indication information only when obtaining the updated time synchronization state information.

The time synchronization state information is provided by the network-side device (for example, a base station) for the terminal after the terminal accesses the network-side device when the terminal determines that the time synchronization state has changed.

Optionally, the updating locally stored time synchronization state indication information includes at least one of the following:
clearing, deleting, or releasing locally stored historical time synchronization state indication information;
replacing locally stored historical time synchronization state indication information with newly received time synchronization state indication information;
storing newly received time synchronization state indication information in a case that no time synchronization state indication information is locally stored; or
updating an active state of locally stored time synchronization state indication information to an inactive state, or updating an inactive state of locally stored time synchronization state indication information to an active state.

Several cases of updating the locally stored time synchronization state indication information are described below by using specific implementation scenarios.

For example, scenario 11: The terminal moves to a cell 1, the cell 1 provides time synchronization state indication information, and the terminal performs a local storage operation on the time synchronization state indication information. In this case, the terminal may consider, based on the local storage operation, that time synchronization state information has changed. If the terminal moves from the cell 1 to a cell 2 and the cell 2 provides time synchronization state indication information that is different from the time synchronization state indication information provided by the cell 1, the terminal considers that the time synchronization state information of the cell has changed, and the terminal clears, deletes, or releases the stored time synchronization state indication information provided by the cell 1. Alternatively, if the cell 2 provides no time synchronization state indication information, the terminal may also clear, delete, or release the stored time synchronization state indication information provided by the cell 1.

For another example, scenario 12: The terminal moves from a cell 1 to a cell 2, both the cell 1 and the cell 2 provide time synchronization state indication information, and when moving to the cell 1, the terminal locally stores time synchronization state indication information provided by the cell 1. In this case, after moving to the cell 2, the terminal may replace the locally stored time synchronization state indication information provided by the cell 1 with time synchronization state indication information provided by the cell 2. For example, the terminal first clears, deletes, or releases the time synchronization state indication information provided by the cell 1, and then locally stores the time synchronization state indication information provided by the cell 2.

For another example, scenario 13: The terminal moves from a cell 1 to a cell 2. The cell 1 is a cell that does not support providing time synchronization state indication information, to be specific, the terminal has no locally stored time synchronization state indication information when camping on the cell 1. When the terminal moves to the cell 2, where the cell 2 is a cell that supports providing time synchronization state indication information, that is, the cell 2 provides time synchronization state indication information, the terminal locally stores newly received time synchronization state indication information provided by the cell 2.

Alternatively, scenario 14: During a period in which the terminal camps on a cell 1, the cell 1 changes from providing no time synchronization state indication information to providing time synchronization state indication information. In this case, the terminal may also locally store newly received time synchronization state indication information provided by the cell 1.

For another example, scenario 15: The terminal moves to a cell 1, and time synchronization state indication information provided by the cell 1 is in an inactive state. The terminal moves from the cell 1 to a cell 2, and time synchronization state indication information provided by the cell 2 is in an active state. The two pieces of time synchronization state indication information are the same. In this case, the terminal may update the time synchronization state indication information from the inactive state to the active state.

In this embodiment of this application, based on different implementation scenarios, the terminal can update the time synchronization state indication information in different manners.

Optionally, in this embodiment of this application, in a case that the terminal performs the operation of determining whether a time synchronization state has changed, the terminal may perform the cell reselection operation, to select a cell that supports providing time synchronization state information, where the cell reselection operation includes at least one of the following:
a selection priority of the terminal for a cell or a frequency that supports providing time synchronization state information is a high priority, to be specific, the terminal preferentially selects a cell or a frequency that supports providing time synchronization state information;
a selection priority of the terminal for a cell or a frequency that does not support providing time synchronization state information is a low priority, to be specific, the terminal preferentially selects a cell or a frequency that supports providing time synchronization state information, and then selects a cell or a frequency that does not support providing time synchronization state information;
in a case that the terminal camps on a cell that supports providing time synchronization state information, the terminal determines that a selection priority of the cell is a high priority, or determines that a selection priority of a frequency corresponding to the cell is a high priority;
in a case that the terminal camps on a frequency that supports providing time synchronization state information, the terminal determines that a selection priority of the frequency is a high priority;
in a case that the terminal camps on a cell that does not support providing time synchronization state information, the terminal determines that a selection priority of the cell is a low priority, or determines that a selection priority of a frequency corresponding to the cell is a low priority; or
in a case that the terminal camps on a frequency that does not support providing time synchronization state information, the terminal determines that a selection priority of the frequency is a low priority.

In this embodiment of this application, a selection priority of a cell or a frequency is set in the foregoing manners, to ensure that the terminal can select a cell or a frequency that supports providing time synchronization state information when performing the cell reselection operation.

Optionally, the terminal determines a cell type based on second information, the cell type includes a cell that supports providing time synchronization state information and a cell that does not support providing time synchronization state information, and the second information includes at least one of the following:
fourth-type indication information, where the fourth-type indication information is used for indicating that the cell is a cell that supports providing time synchronization state information, for example, the fourth-type indication information may be provided by a system message (for example, a SIB 1); or
a time synchronization state information field, where for example, the time synchronization state information field may be provided in a system message.

In some embodiments, the second-type indication information and the fourth-type indication information may be same indication information. To be specific, the second-type indication information is used for indicating that the cell is a cell that supports providing time synchronization state information. The time synchronization state information field herein and the time synchronization state information field included in the time synchronization assistance information may have one meaning, for example, both are time synchronization state information fields in system messages.

Optionally, the time synchronization state information field is used for carrying time synchronization state indication information or is set to null; or
the time synchronization state information field is used for carrying time synchronization state indication information and an active state or an inactive state corresponding to the time synchronization state indication information.

It should be noted that, for related descriptions of the time synchronization state information field, reference may be made to the foregoing descriptions. Details are not described herein again.

Optionally, in this embodiment of this application, in a case that the terminal camps on a cell managed by a first base station or the terminal moves from a second base station to a first base station, an access stratum of the terminal sends first indication information to a non-access stratum, where the first indication information is used for indicating at least one of the following:
the terminal moves to a cell that does not support providing time synchronization state information;
a current serving base station of the terminal does not support providing time synchronization state information; or
a current serving cell of the terminal does not support providing time synchronization state information, where
the first base station is a base station that does not support providing time synchronization state information, and the second base station is a base station that supports providing time synchronization state information.

It should be noted that the terminal camping on the cell managed by the first base station may be: For example, the terminal moves from a cell 1 managed by the first base station to a cell 2, or the terminal camps on a cell 1 managed by the first base station, or the terminal moves from a cell managed by a second base station (that is, a base station that supports providing time synchronization state information) to the cell managed by the first base station. In these cases, the AS of the terminal sends second indication information to the NAS, to indicate that the terminal has moved to a cell that does not support providing time synchronization state information, or indicate that a current serving base station or serving cell of the terminal does not support providing time synchronization state information, so that the terminal determines that a base station or a cell on which the terminal currently camps does not support providing time synchronization state information. This is more conducive to subsequent behavior of the terminal, for example, moving to a base station or a cell that supports providing time synchronization state information.

An embodiment of this application further provides another time synchronization state processing method. The method is performed by a network-side device. FIG. 3 is a flowchart of another time synchronization state processing method according to an embodiment of this application. As shown in FIG. 3, the method includes the following steps:

Step 301: The network-side device sends time synchronization assistance information to a terminal, where the time synchronization assistance information is used for assisting the terminal in performing a first operation, and the first operation includes at least one of the following:
an operation of determining whether a time synchronization state has changed;
a local storage operation for time synchronization state indication information; or
a cell reselection operation, where the cell reselection operation is used by the terminal to select a cell that supports providing time synchronization state information.

Optionally, the time synchronization assistance information includes at least one of the following:
first-type indication information, where the first-type indication information is used for indicating that the network-side device is a network-side device that supports providing time synchronization state information;
second-type indication information, where the second-type indication information is used for indicating that a cell accessed by the terminal is a cell that supports providing time synchronization state information; or
a time synchronization state information field.

Optionally, the time synchronization state information field is used for carrying time synchronization state indication information or is set to null; or
the time synchronization state information field is used for carrying time synchronization state indication information and an active state or an inactive state corresponding to the time synchronization state indication information.

It should be noted that the first-type indication information, the second-type indication information, and the time synchronization state information field may be carried in a system message.

For example, the time synchronization assistance information includes the first-type indication information. Therefore, when receiving the time synchronization assistance information sent by the network-side device, the terminal can determine, based on the first-type indication information, that a currently accessed network-side device is a network-side device that supports providing time synchronization state information, so that the terminal can perform the operation of determining whether a time synchronization state has changed. In this way, the terminal can determine, in a timely manner, whether the time synchronization state has changed, so that the terminal can obtain changed time synchronization state information in a timely manner, to ensure performance of communication between the terminal and the network-side device.

Alternatively, the time synchronization assistance information includes the time synchronization state information field, and the time synchronization state information field carries time synchronization state indication information. Therefore, the terminal can obtain the time synchronization state indication information based on the received time synchronization assistance information, and perform the local storage operation for time synchronization state indication information.

Alternatively, the time synchronization assistance information includes the time synchronization state information field, and the time synchronization state information field is set to null. In this case, the terminal may perform the cell reselection operation based on the time synchronization assistance information, to select a cell that supports providing time synchronization state information, to ensure that the terminal accesses, in a timely manner, a network-side device that provides time synchronization state information, and ensure communication performance of the terminal.

Optionally, when receiving the time synchronization assistance information sent by the network-side device, the terminal may enable the function of accessing a network based on a change in a time synchronization state, and then perform the operation of determining whether a time synchronization state has changed, the local storage operation for time synchronization state indication information, or the cell reselection operation. It should be noted that, for a specific implementation process of performing the operations by the terminal, reference may be made to the descriptions in the foregoing terminal-side method embodiment. Details are not described herein again.

In this embodiment of this application, the network-side device sends the time synchronization assistance information to the terminal, to assist the terminal in performing the operation of determining whether a time synchronization state has changed, the local storage operation for time synchronization state indication information, or the cell reselection operation, so that the terminal can determine that a current time synchronization state has changed, to ensure that the terminal can access the network-side device in a timely manner, and ensure performance of communication between the terminal and the network-side device.

It should be noted that the network-side device in this embodiment of this application may include the base station in the foregoing terminal-side embodiment.

Optionally, in this embodiment of this application, the method further includes the following step:
The network-side device sends time synchronization state information to the terminal when the network-side device determines that the terminal accesses a network based on a change in the time synchronization state.

For example, when the terminal determines that the time synchronization state has changed, the terminal accesses the network-side device, and the network-side device sends the time synchronization state information to the terminal, to ensure that the terminal can obtain a changed time synchronization state in a timely manner.

It should be noted that the method provided in this embodiment of this application corresponds to the terminal-side method embodiment of FIG. 2. For related concepts and specific implementation processes in this embodiment of this application, refer to the descriptions in the method embodiment of FIG. 2. To avoid repetition, details are not described herein again.

The time synchronization state processing method provided in the embodiments of this application may be performed by a time synchronization state processing apparatus. In the embodiments of this application, a time synchronization state processing apparatus provided in the embodiments of this application is described by using an example in which the time synchronization state processing apparatus performs the time synchronization state processing method.

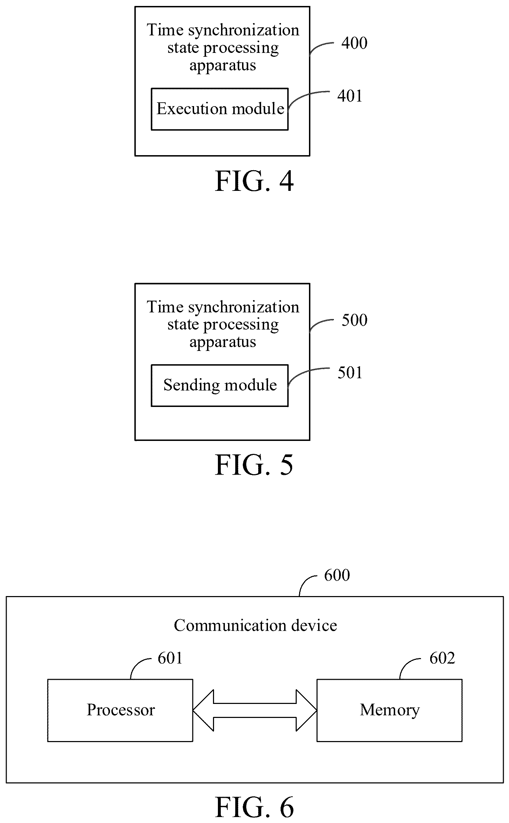

FIG. 4 shows a time synchronization state processing apparatus according to an embodiment of this application. The apparatus is applied to a terminal. As shown in FIG. 4, the time synchronization state processing apparatus 400 includes:
an execution module 401, configured to perform a first operation in a case that the terminal enables a function of accessing a network based on a change in a time synchronization state, where the first operation includes at least one of the following:
an operation of determining whether a time synchronization state has changed;
a local storage operation for time synchronization state indication information; or
a cell reselection operation, where the cell reselection operation is used by the terminal to select a cell that supports providing time synchronization state information.

Optionally, the apparatus includes:
a receiving module, configured to receive time synchronization assistance information sent by a base station, where the time synchronization assistance information is used for assisting the terminal in performing the first operation, where
the time synchronization assistance information includes one or more of the following:
   first-type indication information, where the first-type indication information is used for indicating that the base station is a base station that supports providing time synchronization state information;
   second-type indication information, where the second-type indication information is used for indicating that a cell accessed by the terminal is a cell that supports providing time synchronization state information; or
   a time synchronization state information field.

Optionally, when the execution module 401 performs the operation of determining whether a time synchronization state has changed, in a case that a first condition is met, the terminal determines that time synchronization state information of a cell has changed, where
the first condition includes at least one of the following:
the terminal moves from a first base station to a second base station;
the terminal moves from a second base station to a first base station;
the terminal moves from a second base station to another second base station;
the terminal moves from a first cell to a second cell, where the first cell and the second cell are cells managed by a same second base station, the second cell provides time synchronization state indication information, and the terminal currently has no locally stored time synchronization state indication information;
during a period in which the terminal camps on a third cell of a second base station, the third cell changes from providing no time synchronization state indication information to providing time synchronization state indication information;
during a period in which the terminal camps on a fourth cell of a second base station, the fourth cell changes from providing first time synchronization state indication information to providing second time synchronization state indication information, where the first time synchronization state indication information is different from the second time synchronization state indication information;
during a period in which the terminal camps on a fifth cell of a second base station, time synchronization state indication information provided by the fifth cell changes from an active state to an inactive state;
during a period in which the terminal camps on a sixth cell of a second base station, time synchronization state indication information provided by the sixth cell changes from an inactive state to an active state;
the terminal moves from a seventh cell to an eighth cell, where both a state corresponding to third time synchronization state indication information provided by the seventh cell and a state corresponding to fourth time synchronization state indication information provided by the eighth cell are inactive states, and the third time synchronization state indication information is different from the fourth time synchronization state indication information;
the terminal moves from a ninth cell to a tenth cell, where a state corresponding to fifth time synchronization state indication information provided by the ninth cell is an inactive state, a state corresponding to sixth time synchronization state indication information provided by the tenth cell is an active state, and the fifth time synchronization state indication information is the same as the sixth time synchronization state indication information; or
the terminal moves from an eleventh cell to a twelfth cell, where a state corresponding to seventh time synchronization state indication information provided by the eleventh cell is an active state, a state corresponding to eighth time synchronization state indication information provided by the twelfth cell is an inactive state, and the seventh time synchronization state indication information is the same as the eighth time synchronization state indication information, where
the first base station is a base station that does not support providing time synchronization state information, and the second base station is a base station that supports providing time synchronization state information.

Optionally, the terminal determines a base station type based on first information, the base station type includes a first base station and a second base station, the first base station is a base station that does not support providing time synchronization state information, and the second base station is a base station that supports providing time synchronization state information, where
the first information includes at least one of the following:
third-type indication information, where the third-type indication information is used for indicating that the base station type is the second base station; or
a time synchronization state information field.

In some embodiments, the first-type indication information and the third-type indication information may be the same indication information. To be specific, the first-type indication information is used for indicating that the base station is a base station that supports providing time synchronization state information, that is, the base station is the second base station.

Optionally, in a case that the execution module 401 performs the operation of determining whether a time synchronization state has changed, if a second condition is met, the terminal determines that time synchronization state information of a cell does not change, where the second condition includes at least one of the following:
the terminal moves from a second base station to a first base station;
the terminal moves from a first base station to another first station; or
the terminal moves from a thirteenth cell to a fourteenth cell, where the thirteenth cell and the fourteenth cell are cells managed by a same second base station, a state corresponding to ninth time synchronization state indication information provided by the thirteenth cell is the same as a state corresponding to tenth time synchronization state indication information provided by the fourteenth cell, and the ninth time synchronization state indication information is the same as the tenth time synchronization state indication information, where
the first base station is a base station that does not support providing time synchronization state information, and the second base station is a base station that supports providing time synchronization state information.

Optionally, the execution module 401 is further configured to perform at least one of the following:
updating locally stored time synchronization state indication information when determining that time synchronization state information has changed; or
updating locally stored time synchronization state indication information when obtaining updated time synchronization state information.

Optionally, the updating locally stored time synchronization state indication information includes at least one of the following:
clearing, deleting, or releasing locally stored historical time synchronization state indication information;
replacing locally stored historical time synchronization state indication information with newly received time synchronization state indication information;
storing newly received time synchronization state indication information in a case that no time synchronization state indication information is locally stored; or
updating an active state of locally stored time synchronization state indication information to an inactive state, or updating an inactive state of locally stored time synchronization state indication information to an active state.

Optionally, the execution module 401 is further configured to perform at least one of the following:
determining that a selection priority of a cell or a frequency that supports providing time synchronization state information is a high priority;
determining that a selection priority of a cell or a frequency that does not support providing time synchronization state information is a low priority;
in a case that the terminal camps on a cell that supports providing time synchronization state information, determining that a selection priority of the cell is a high priority, or determines that a selection priority of a frequency corresponding to the cell is a high priority;
in a case that the terminal camps on a frequency that supports providing time synchronization state information, determining that a selection priority of the frequency is a high priority;
in a case that the terminal camps on a cell that does not support providing time synchronization state information, determining that a selection priority of the cell is a low priority, or determines that a selection priority of a frequency corresponding to the cell is a low priority; or
in a case that the terminal camps on a frequency that does not support providing time synchronization state information, determining that a selection priority of the frequency is a low priority.

Optionally, the terminal determines a cell type based on second information, the cell type includes a cell that supports providing time synchronization state information and a cell that does not support providing time synchronization state information, and the second information includes at least one of the following:
fourth-type indication information, where the fourth-type indication information is used for indicating that the cell is a cell that supports providing time synchronization state information; or
a time synchronization state information field.

In some embodiments, the second-type indication information and the fourth-type indication information may be same indication information. To be specific, the second-type indication information is used for indicating that the cell is a cell that supports providing time synchronization state information.

Optionally, the time synchronization state information field carries time synchronization state indication information or is set to null; or
the time synchronization state information field carries time synchronization state indication information and an active state or an inactive state corresponding to the time synchronization state indication information.

Optionally, in a case that the terminal camps on a cell managed by a first base station or the terminal moves from a second base station to a first base station, an access stratum of the terminal sends first indication information to a non-access stratum, where the first indication information is used for indicating at least one of the following:
the terminal moves to a cell that does not support providing time synchronization state information;
a current serving base station of the terminal does not support providing time synchronization state information; or
a current serving cell of the terminal does not support providing time synchronization state information, where
the first base station is a base station that does not support providing time synchronization state information, and the second base station is a base station that supports providing time synchronization state information.

In this embodiment of this application, in a case that the terminal enables the function of accessing a network based on a change in a time synchronization state, the apparatus performs the operation of determining whether a time synchronization state has changed, or performs the local storage operation for time synchronization state indication information, or performs the cell reselection operation, to determine whether a time synchronization state of a cell has changed. This enables the terminal to access a network-side device in a timely manner to obtain changed time synchronization state information, to effectively ensure performance of communication between the terminal and the network-side device.

The time synchronization state processing apparatus 400 in this embodiment of this application may be an electronic device, for example, an electronic device with an operating system; or may be a component in an electronic device, for example, an integrated circuit or a chip. The electronic device may be a terminal or another device other than the terminal. For example, the terminal may include but is not limited to the aforementioned types of the terminal 11, and the another device may be a server, a network attached storage (Network Attached Storage, NAS), or the like. This is not specifically limited in this embodiment of this application.

The time synchronization state processing apparatus 400 provided in this embodiment of this application is capable of implementing the processes implemented by the terminal in the method embodiment of FIG. 2, with the same technical effects achieved. To avoid repetition, details are not described herein again.

FIG. 5 shows another time synchronization state processing apparatus according to an embodiment of this application. The apparatus is applied to a network-side device. As shown in FIG. 5, the time synchronization state processing apparatus 500 includes:
a sending module 501, configured to send time synchronization assistance information to a terminal, where the time synchronization assistance information is used for assisting the terminal in performing a first operation, and the first operation includes at least one of the following:
an operation of determining whether a time synchronization state has changed;
a local storage operation for time synchronization state indication information; or
a cell reselection operation, where the cell reselection operation is used by the terminal to select a cell that supports providing time synchronization state information.

Optionally, the sending module 501 is further configured to:
send time synchronization state information to the terminal when the network-side device determines that the terminal accesses a network based on a change in the time synchronization state.

Optionally, the time synchronization assistance information includes at least one of the following:
first-type indication information, where the first-type indication information is used for indicating that the network-side device is a network-side device that supports providing time synchronization state information;
second-type indication information, where the second-type indication information is used for indicating that a cell accessed by the terminal is a cell that supports providing time synchronization state information; or
a time synchronization state information field.

Optionally, the time synchronization state information field is used for carrying time synchronization state indication information or is set to null; or
the time synchronization state information field is used for carrying time synchronization state indication information and an active state or an inactive state corresponding to the time synchronization state indication information.

In this embodiment of this application, the apparatus sends the time synchronization assistance information to the terminal, to assist the terminal in performing the operation of determining whether a time synchronization state has changed, the local storage operation for time synchronization state indication information, or the cell reselection operation, so that the terminal can determine that a current time synchronization state has changed, to ensure that the terminal can access the network-side device in a timely manner, and ensure performance of communication between the terminal and the network-side device.

The time synchronization state processing apparatus 500 provided in this embodiment of this application is capable of implementing the processes implemented by the network-side device in the method embodiment of FIG. 3, with the same technical effects achieved. To avoid repetition, details are not described herein again.

As shown in FIG. 6, an embodiment of this application further provides a communication device 600, including a processor 601 and a memory 602. The memory 602 stores a program or instructions capable of running on the processor 601. For example, in a case that the communication device 600 is a terminal, when the program or the instructions are executed by the processor 601, the steps in the method embodiment of FIG. 2 are implemented, with the same technical effects achieved. In a case that the communication device 600 is a network-side device, when the program or instructions are executed by the processor 601, the steps in the method embodiment of FIG. 3 are implemented, with the same technical effects achieved. To avoid repetition, details are not described herein again.

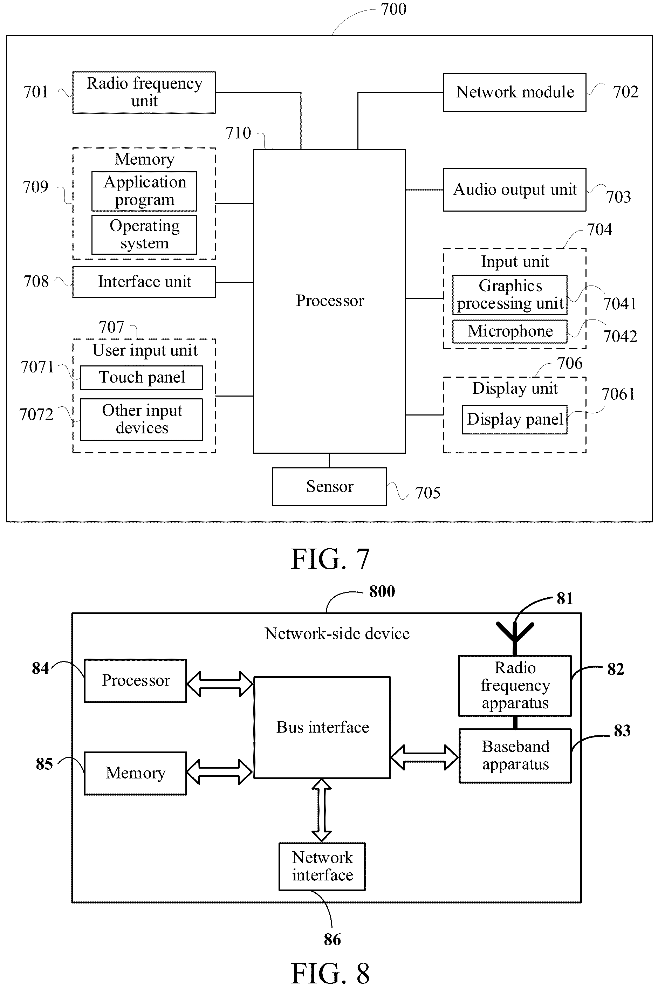

An embodiment of this application further provides a terminal, including a processor and a communication interface. The communication interface is coupled to the processor, and the processor is configured to run a program or instructions to implement the steps in the method embodiment shown in FIG. 2. The terminal embodiment corresponds to the foregoing terminal-side method embodiment, and all implementation processes and implementations of the foregoing method embodiment are applicable to the terminal embodiment, with the same technical effects achieved. Specifically, FIG. 7 is a schematic diagram of a hardware structure of a terminal for implementing the embodiments of this application.

The terminal 700 includes but is not limited to at least some of components such as a radio frequency unit 701, a network module 702, an audio output unit 703, an input unit 704, a sensor 705, a display unit 706, a user input unit 707, an interface unit 708, a memory 709, and a processor 710.

A person skilled in the art can understand that the terminal 700 may further include a power supply (for example, a battery) that supplies power to each component. The power supply may be logically connected to the processor 710 through a power management system, so that functions such as charging management, discharging management, and power consumption management are implemented through the power management system. The terminal structure shown in FIG. 7 does not constitute a limitation on the terminal. The terminal may include more or fewer components than those shown in the figure, or some components may be combined, or different component arrangements may be used. Details are not described herein again.

It should be understood that, in this embodiment of this application, the input unit 704 may include a graphics processing unit (Graphics Processing Unit, GPU) 7041 and a microphone 7042. The graphics processing unit 7041 processes image data of a static picture or a video that is obtained by an image capture apparatus (for example, a camera) in a video capture mode or an image capture mode. The display unit 706 may include a display panel 7061. The display panel 7061 may be configured in a form of a liquid crystal display, an organic light-emitting diode, or the like. The user input unit 707 includes at least one of a touch panel 7071 and other input devices 7072. The touch panel 7071 is also referred to as a touchscreen. The touch panel 7071 may include two parts: a touch detection apparatus and a touch controller. The other input devices 7072 may include but are not limited to a physical keyboard, a function button (such as a volume control button or an on/off button), a trackball, a mouse, and a joystick. Details are not described herein.

In this embodiment of this application, after receiving downlink data from a network-side device, the radio frequency unit 701 may transmit the downlink data to the processor 710 for processing. In addition, the radio frequency unit 701 may send uplink data to the network-side device. Usually, the radio frequency unit 701 includes but is not limited to an antenna, an amplifier, a transceiver, a coupler, a low noise amplifier, a duplexer, and the like.

The memory 709 may be configured to store software programs or instructions and various data. The memory 709 may mainly include a first storage area for storing a program or instructions and a second storage area for storing data. The first storage area may store an operating system, an application or instructions required by at least one function (for example, an audio play function or an image play function), and the like. In addition, the memory 709 may include a volatile memory or non-volatile memory 70. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchlink dynamic random access memory (Synchlink DRAM, SLDRAM), or a direct rambus random access memory (Direct Rambus RAM, DRRAM). The memory 709 in this embodiment of this application includes but is not limited to these and any other suitable types of memories.

The processor 710 may include one or more processing units. Optionally, the processor 710 integrates an application processor and a modem processor. The application processor mainly processes operations related to an operating system, a user interface, an application, and the like. The modem processor mainly processes wireless communication signals, for example, is a baseband processor. It can be understood that the modem processor may alternatively not be integrated in the processor 710.

The processor 710 is configured to perform a first operation in a case that the terminal enables a function of accessing a network based on a change in a time synchronization state, where the first operation includes at least one of the following:
an operation of determining whether a time synchronization state has changed;
a local storage operation for time synchronization state indication information; or
a cell reselection operation, where the cell reselection operation is used by the terminal to select a cell that supports providing time synchronization state information.

In this embodiment of this application, in a case that the function of accessing a network based on a change in a time synchronization state is enabled, the terminal performs the operation of determining whether a time synchronization state has changed, or performs the local storage operation for time synchronization state indication information, or performs the cell reselection operation, so that the terminal can determine whether a time synchronization state of a cell has changed. This enables the terminal to access a network-side device in a timely manner to obtain changed time synchronization state information, to effectively ensure performance of communication between the terminal and the network-side device.

It can be understood that, for implementation processes of the implementations in this embodiment, reference may be made to related descriptions of the time synchronization state processing method in the method embodiment, with the same or corresponding technical effects achieved. To avoid repetition, details are not described herein again.

An embodiment of this application further provides a network-side device, including a processor and a communication interface. The communication interface is coupled to the processor, and the processor is configured to run a program or instructions to implement the steps in the method embodiment shown in FIG. 3. The network-side device embodiment corresponds to the foregoing method embodiment for the network-side device, and all implementation processes and implementations of the foregoing method embodiment are applicable to the network-side device embodiment, with the same technical effects achieved.

Specifically, an embodiment of this application further provides a network-side device. As shown in FIG. 8, the network-side device 800 includes an antenna 81, a radio frequency apparatus 82, a baseband apparatus 83, a processor 84, and a memory 85. The antenna 81 is connected to the radio frequency apparatus 82. In an uplink direction, the radio frequency apparatus 82 receives information through the antenna 81, and sends the received information to the baseband apparatus 83 for processing. In a downlink direction, the baseband apparatus 83 processes to-be-sent information, and sends the information to the radio frequency apparatus 82; and the radio frequency apparatus 82 processes the received information and then sends the information through the antenna 81.

The methods performed by the network-side device in the foregoing embodiments may be implemented in the baseband apparatus 83, and the baseband apparatus 83 includes a baseband processor.

The baseband apparatus 83 may include, for example, at least one baseband board, where a plurality of chips are disposed on the baseband board. As shown in FIG. 8, one of the chips is, for example, the baseband processor, which is connected to the memory 85 through a bus interface, to invoke a program in the memory 85 to perform the operations of the network device shown in the foregoing method embodiments.

The network-side device may further include a network interface 86. The interface is, for example, a common public radio interface (Common Public Radio Interface, CPRI).

Specifically, the network-side device 800 in this embodiment of the present invention further includes instructions or a program stored in the memory 85 and capable of running on the processor 84, and the processor 84 invokes the instructions or program in the memory 85 to perform the method performed by the modules shown in FIG. 5, with the same technical effects achieved. To avoid repetition, details are not described herein again.

An embodiment of this application further provides a readable storage medium. The readable storage medium stores a program or instructions. When the program or the instructions are executed by a processor, the processes in the method embodiment of FIG. 2 or FIG. 3 are implemented, with the same technical effects achieved. To avoid repetition, details are not described herein again.

The processor is a processor in the terminal in the foregoing embodiments. The readable storage medium includes a computer-readable storage medium, for example, a computer read-only memory ROM, a random access memory RAM, a magnetic disk, or a compact disc. In some examples, the readable storage medium may be a non-transitory readable storage medium.

An embodiment of this application further provides a chip. The chip includes a processor and a communication interface. The communication interface is coupled to the processor. The processor is configured to run a program or instructions, to implement the processes in the method embodiment of FIG. 2 or FIG. 3, with the same technical effects achieved. To avoid repetition, details are not described herein again.

It should be understood that the chip provided in this embodiment of this application may also be referred to as a system-level chip, a system on chip, a chip system, a system-on-a-chip, or the like.

An embodiment of this application further provides a computer program/program product. The computer program/program product is stored in a storage medium. The computer program/program product is executed by at least one processor to implement the processes in the method embodiment of FIG. 2 or FIG. 3, with the same technical effects achieved. To avoid repetition, details are not described herein again.

An embodiment of this application further provides a communication system, including a terminal and a network-side device. The terminal may be configured to perform the steps of the foregoing time synchronization state processing method, and the network-side device may be configured to perform the steps of the foregoing time synchronization state processing method.

It should be noted that the terms "include", "comprise", or any of their variants in this specification are intended to cover a non-exclusive inclusion, so that a process, a method, an object, or an apparatus that includes a list of elements not only includes those elements but also includes other elements that are not expressly listed, or further includes elements inherent to such a process, method, object, or apparatus. Without more restrictions, an element defined by the statement "including a..." does not preclude existence of other identical elements in a process, method, object, or apparatus that includes the element. In addition, it should be noted that the scope of the methods and the apparatuses in the implementations of this application is not limited to performing functions in the shown or described order, but may also include performing functions in a substantially simultaneous manner or in a reverse order depending on the functions involved. For example, the described methods may be performed in an order different from that described, and steps may be added, omitted or combined. In addition, features described with reference to some examples may be combined in other examples.

According to the foregoing descriptions of the implementations, a person skilled in the art may clearly understand that the methods in the foregoing embodiments may be implemented by a computer software product in combination with a hardware platform, or certainly may be implemented by hardware. The computer software product is stored in a storage medium (for example, a ROM, a RAM, a magnetic disk, or a compact disc), and includes several instructions for instructing a terminal or a network-side device to perform the methods described in the embodiments of this application.

The foregoing describes the embodiments of this application with reference to the accompanying drawings. However, this application is not limited to the foregoing specific implementations. The foregoing specific implementations are merely examples, but are not limitative. Inspired by this application, a person of ordinary skill in the art may further perform implementations in many forms without departing from the purposes of this application and the protection scope of the claims, and all the implementations shall fall within the protection scope of this application.

## Claims

1. A time synchronization state processing method, comprising:
performing, by a terminal, a first operation in a case that a function of accessing a network based on a change in a time synchronization state is enabled, wherein the first operation comprises at least one of the following:
an operation of determining whether a time synchronization state has changed;
a local storage operation for time synchronization state indication information; or
a cell reselection operation, wherein the cell reselection operation is used by the terminal to select a cell that supports providing time synchronization state information.

2. The method according to claim 1, wherein before the performing a first operation, the method further comprises:
receiving, by the terminal, time synchronization assistance information sent by a base station, wherein the time synchronization assistance information is used for assisting the terminal in performing the first operation, wherein
the time synchronization assistance information comprises one or more of the following:
first-type indication information, wherein the first-type indication information is used for indicating that the base station is a base station that supports providing time synchronization state information;
second-type indication information, wherein the second-type indication information is used for indicating that a cell accessed by the terminal is a cell that supports providing time synchronization state information; or
a time synchronization state information field.

3. The method according to claim 1, wherein when the terminal performs the operation of determining whether a time synchronization state has changed, in a case that a first condition is met, the terminal determines that time synchronization state information of a cell has changed, wherein
the first condition comprises at least one of the following:
the terminal moves from a first base station to a second base station;
the terminal moves from a second base station to a first base station;
the terminal moves from a second base station to another second base station;
the terminal moves from a first cell to a second cell, wherein the first cell and the second cell are cells managed by a same second base station, the second cell provides time synchronization state indication information, and the terminal currently has no locally stored time synchronization state indication information;
during a period in which the terminal camps on a third cell of a second base station, the third cell changes from providing no time synchronization state indication information to providing time synchronization state indication information;
during a period in which the terminal camps on a fourth cell of a second base station, the fourth cell changes from providing first time synchronization state indication information to providing second time synchronization state indication information, wherein the first time synchronization state indication information is different from the second time synchronization state indication information;
during a period in which the terminal camps on a fifth cell of a second base station, time synchronization state indication information provided by the fifth cell changes from an active state to an inactive state;
during a period in which the terminal camps on a sixth cell of a second base station, time synchronization state indication information provided by the sixth cell changes from an inactive state to an active state;
the terminal moves from a seventh cell to an eighth cell, wherein both a state corresponding to third time synchronization state indication information provided by the seventh cell and a state corresponding to fourth time synchronization state indication information provided by the eighth cell are inactive states, and the third time synchronization state indication information is different from the fourth time synchronization state indication information;
the terminal moves from a ninth cell to a tenth cell, wherein a state corresponding to fifth time synchronization state indication information provided by the ninth cell is an inactive state, a state corresponding to sixth time synchronization state indication information provided by the tenth cell is an active state, and the fifth time synchronization state indication information is the same as the sixth time synchronization state indication information; or
the terminal moves from an eleventh cell to a twelfth cell, wherein a state corresponding to seventh time synchronization state indication information provided by the eleventh cell is an active state, a state corresponding to eighth time synchronization state indication information provided by the twelfth cell is an inactive state, and the seventh time synchronization state indication information is the same as the eighth time synchronization state indication information, wherein
the first base station is a base station that does not support providing time synchronization state information, and the second base station is a base station that supports providing time synchronization state information.

4. The method according to claim 1, wherein in a case that the terminal performs the operation of determining whether a time synchronization state has changed, in a case that a second condition is met, the terminal determines that time synchronization state information of a cell does not change, wherein
the second condition comprises at least one of the following:
the terminal moves from a second base station to a first base station;
the terminal moves from a first base station to another first station; or
the terminal moves from a thirteenth cell to a fourteenth cell, wherein the thirteenth cell and the fourteenth cell are cells managed by a same second base station, a state corresponding to ninth time synchronization state indication information provided by the thirteenth cell is the same as a state corresponding to tenth time synchronization state indication information provided by the fourteenth cell, the ninth time synchronization state indication information is the same as the tenth time synchronization state indication information, the first base station is a base station that does not support providing time synchronization state information, and the second base station is a base station that supports providing time synchronization state information.

5. The method according to claim 2, 3, or 4, wherein the terminal determines a base station type based on first information, the base station type comprises a first base station and a second base station, the first base station is a base station that does not support providing time synchronization state information, and the second base station is a base station that supports providing time synchronization state information, wherein
the first information comprises at least one of the following:
third-type indication information, wherein the third-type indication information is used for indicating that the base station type is the second base station; or
a time synchronization state information field.

6. The method according to any one of claims 1 to 5, wherein the performing, by a terminal, a local storage operation for time synchronization state indication information comprises at least one of the following:
updating, by the terminal, locally stored time synchronization state indication information when determining that time synchronization state information has changed; or
updating, by the terminal, locally stored time synchronization state indication information when obtaining updated time synchronization state information.

7. The method according to claim 6, wherein the updating locally stored time synchronization state indication information comprises at least one of the following:
clearing, deleting, or releasing locally stored historical time synchronization state indication information;
replacing locally stored historical time synchronization state indication information with newly received time synchronization state indication information;
storing newly received time synchronization state indication information in a case that no time synchronization state indication information is locally stored; or
updating an active state of locally stored time synchronization state indication information to an inactive state, or updating an inactive state of locally stored time synchronization state indication information to an active state.

8. The method according to claim 1, wherein the cell reselection operation comprises at least one of the following:
a selection priority of the terminal for a cell or a frequency that supports providing time synchronization state information is a high priority;
a selection priority of the terminal for a cell or a frequency that does not support providing time synchronization state information is a low priority;
in a case that the terminal camps on a cell that supports providing time synchronization state information, the terminal determines that a selection priority of the cell is a high priority, or determines that a selection priority of a frequency corresponding to the cell is a high priority;
in a case that the terminal camps on a frequency that supports providing time synchronization state information, the terminal determines that a selection priority of the frequency is a high priority;
in a case that the terminal camps on a cell that does not support providing time synchronization state information, the terminal determines that a selection priority of the cell is a low priority, or determines that a selection priority of a frequency corresponding to the cell is a low priority; or
in a case that the terminal camps on a frequency that does not support providing time synchronization state information, the terminal determines that a selection priority of the frequency is a low priority.

9. The method according to claim 2 or 8, wherein the terminal determines a cell type based on second information, the cell type comprises a cell that supports providing time synchronization state information and a cell that does not support providing time synchronization state information, and the second information comprises at least one of the following:
fourth-type indication information, wherein the fourth-type indication information is used for indicating that the cell is a cell that supports providing time synchronization state information; or
a time synchronization state information field.

10. The method according to claim 5 or 9, wherein the time synchronization state information field is used for carrying time synchronization state indication information or is set to null; or
the time synchronization state information field is used for carrying time synchronization state indication information and an active state or an inactive state corresponding to the time synchronization state indication information.

11. The method according to any one of claims 1 to 10, wherein in a case that the terminal camps on a cell managed by a first base station or the terminal moves from a second base station to a first base station, an access stratum of the terminal sends first indication information to a non-access stratum, wherein the first indication information is used for indicating at least one of the following:
the terminal moves to a cell that does not support providing time synchronization state information;
a current serving base station of the terminal does not support providing time synchronization state information; or
a current serving cell of the terminal does not support providing time synchronization state information, wherein
the first base station is a base station that does not support providing time synchronization state information, and the second base station is a base station that supports providing time synchronization state information.

12. A time synchronization state processing method, comprising:
sending, by a network-side device, time synchronization assistance information to a terminal, wherein the time synchronization assistance information is used for assisting the terminal in performing a first operation, and the first operation comprises at least one of the following:
an operation of determining whether a time synchronization state has changed;
a local storage operation for time synchronization state indication information; or
a cell reselection operation, wherein the cell reselection operation is used by the terminal to select a cell that supports providing time synchronization state information.

13. The method according to claim 12, wherein the method further comprises:
sending, by the network-side device, time synchronization state information to the terminal when the network-side device determines that the terminal accesses a network based on a change in the time synchronization state.

14. The method according to claim 12, wherein the time synchronization assistance information comprises at least one of the following:
first-type indication information, wherein the first-type indication information is used for indicating that the network-side device is a network-side device that supports providing time synchronization state information;
second-type indication information, wherein the second-type indication information is used for indicating that a cell accessed by the terminal is a cell that supports providing time synchronization state information; or
a time synchronization state information field.

15. The method according to claim 14, wherein the time synchronization state information field is used for carrying time synchronization state indication information or is set to null; or
the time synchronization state information field is used for carrying time synchronization state indication information and an active state or an inactive state corresponding to the time synchronization state indication information.

16. A time synchronization state processing apparatus, applied to a terminal, wherein the apparatus comprises:
an execution module, configured to perform a first operation in a case that the terminal enables a function of accessing a network based on a change in a time synchronization state, wherein the first operation comprises at least one of the following:
an operation of determining whether a time synchronization state has changed;
a local storage operation for time synchronization state indication information; or
a cell reselection operation, wherein the cell reselection operation is used by the terminal to select a cell that supports providing time synchronization state information.

17. A time synchronization state processing apparatus, applied to a network-side device, wherein the apparatus comprises:
a sending module, configured to send time synchronization assistance information to a terminal, wherein the time synchronization assistance information is used for assisting the terminal in performing a first operation, and the first operation comprises at least one of the following:
an operation of determining whether a time synchronization state has changed;
a local storage operation for time synchronization state indication information; or
a cell reselection operation, wherein the cell reselection operation is used by the terminal to select a cell that supports providing time synchronization state information.

18. A terminal, comprising a processor and a memory, wherein the memory stores a program or instructions capable of running on the processor, and when the program or the instructions are executed by the processor, the steps of the time synchronization state processing method according to any one of claims 1 to 11 are implemented.

19. A network-side device, comprising a processor and a memory, wherein the memory stores a program or instructions capable of running on the processor, and when the program or the instructions are executed by the processor, the steps of the time synchronization state processing method according to any one of claims 12 to 15 are implemented.

20. A readable storage medium, wherein the readable storage medium stores a program or instructions, and when the program or the instructions are executed by a processor, the steps of the time synchronization state processing method according to any one of claims 1 to 11 are implemented, or the steps of the time synchronization state processing method according to any one of claims 12 to 15 are implemented.
